# EUROPEAN PATENT APPLICATION

(11) **EP 4 797 173 A1**
(43) Date of publication of application: **26.08.2026**
(21) Application number: 25222092.6
(22) Date of filing: 10.12.2025
(51) Int. Cl.: G06Q 10/0633

(54) **PROCESS FLOW BEHAVIOR PREDICTION**

(30) Priority: 25.02.2025 US 202519062746
(71) Applicant: Fujitsu Limited, Kawasaki-shi, Kanagawa 211-8588 (JP)
(72) Inventor: AU, Wing Yee, Santa Clara, California, 94054 (US); AHALPARA, Trishala Jayesh, Santa Clara, California, 94054 (US); UCHINO, Kanji, Santa Clara, California, 94054 (US)
(74) Representative: Hoffmann Eitle

(57) **Abstract**

According to an aspect of an embodiment, operations may include obtaining data corresponding to a completed process flow, the completed process flow being associated with an incident that has been resolved. The operations may further include generating one or more labels that serve as target variables for training a machine learning model based on the data corresponding to the completed process flow. The operations may additionally include extracting a subset of the data corresponding to a predefined time range cutoff. Further, the operations may include generating a plurality of features derived from the data corresponding to the completed process flow for training the machine learning model and training the machine learning model to predict future behavior of ongoing process flows using the plurality of features and the one or more labels associated with the data corresponding to the completed process flow.

## Description

### FIELD

The embodiments discussed herein are related to process flow behavior prediction including, for example, process flow prediction based on partial flow information using machine learning.

### BACKGROUND

Process flows are used across various industries and domains to describe a sequence of events associated with a particular incident. In some instances, process flows are designed to represent tasks and operations aimed at achieving a goal. These flows offer a structured framework for capturing and organizing events and interactions within a process, enabling clear communication and analysis. While process flows may also guide task execution, their descriptive nature allows organizations to document and understand the progression of events, decision points, and outcomes related to specific scenarios or incidents. Process flows are often visualized using diagrams, charts, or textual descriptions that illustrate each step, decision point, and their interconnections, facilitating streamlined operations, error reduction, and enhanced productivity.

The subject matter claimed herein is not limited to embodiments that solve any disadvantages or that operate only in environments such as those described above. Rather, this background is only provided to illustrate one example technology area where some embodiments described herein may be practiced.

### SUMMARY

According to an aspect of an embodiment, operations may include obtaining data corresponding to a completed process flow, the completed process flow being associated with an incident that has been resolved. The operations may also include generating one or more labels representing characteristics of the incident that serve as target variables for training a machine learning model based on the data corresponding to the completed process flow. In addition, the operations may further include extracting a subset of the data indicating one or more events that occurred during a predefined time range cutoff defined within a total amount of time for the completed process flow. Further, the operations may include generating a plurality of features representing identifiable attributes derived from the obtained data corresponding to the completed process flow for training a machine learning model based on the subset of the data corresponding to the predefined time range cutoff. In addition, the operations may include training the machine learning model to predict future behavior of ongoing process flows using the plurality of features and the one or more labels associated with the data corresponding to the completed process flow.

The object and advantages of the embodiments will be realized and achieved at least by the elements, features, and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 illustrates an environment related to training a machine learning system to predict future behavior of existing or ongoing process flows;
FIG. 2 illustrates an example environment including a system designed to generate labels and features to train a machine learning model;
FIG. 3A illustrates a flowchart of an example method of generating duration-based features as input to a machine learning model;
FIG. 3B illustrates a flowchart of an example method of generating activity-based features as input to a machine learning model;
FIG. 3C illustrates a flowchart of an example method of generating graph-based features as input to a machine learning model;
FIG. 4 illustrates an example environment including a machine learning system designed to generate a prediction of behavior of an ongoing process flow based on ongoing process flow data;
FIG. 5 illustrates an example flow chart of an example method of training a machine learning model to predict behavior associated with one or more ongoing process flows; and
FIG. 6 illustrates a block diagram of an example computing system, all arranged in accordance with one or more embodiments of the present disclosure.

### DESCRIPTION OF EMBODIMENTS

Many organizations and systems use process flows to depict, for example, a progression of events or activities associated with a particular incident. By capturing the temporal or event-driven dynamics of processes, process flows provide a descriptive framework for organizations to model and visualize workflows, identify interdependencies, gain insights into operational patterns, and perform operations based on the process flow. Widely adopted across industries, process flows enable organizations to track how incidents unfold over time, offering clarity into complex systems without prescribing rigid execution pathways. This versatility makes process flows important for improving transparency, resolving an incident, and adapting to the unique needs of diverse operational environments.

While process flows effectively describe events and activities associated with an incident in a descriptive manner, they often fail to provide accurate predictive insights regarding outcomes or behaviors of subsequent process flows in a prescriptive manner. Prior solutions have attempted to forecast or predict future behaviors associated with process flows by statistically analyzing historical data linked to analogous process flows. However, such historical statistical analyses are expensive-requiring a great deal of personnel expertise-and are limited to identifying general trends and patterns, which may not accurately reflect the nuances of specific process flows within the same category.

For instance, consider a process flow related to a customer issue with a specific product. By analyzing historical data from process flows for similar product issues, one may determine that the average resolution time for such cases is approximately two weeks. Based on this statistical insight, one may predict that the current process flow will similarly take about two weeks to conclude.

However, this approach relies on overly simplistic assumptions that project past trends onto ongoing and future process flows. This historical statistical approach neglects accounting for unique factors influencing each individual process flow, such as specific events, activities, and context. By failing to incorporate these variables, brute-force statistical analyses often yield inaccurate and unhelpful predictions, limiting their utility in real-world applications. Even in instances where historical analyses may provide helpful insights, the time and expertise used to factor in specific, relevant variables is expensive-sometimes prohibitively so.

As detailed below, one or more embodiments of the present disclosure relate to training a machine learning system to predict future behavior associated with an ongoing process flow. In some embodiments, machine learning models may analyze and incorporate a vast array of variables and relationships within a process flow, including event sequences, contextual factors, and external influences that traditional statistical methods may not effectively capture. Unlike static statistical approaches, machine learning systems dynamically learn and adapt to patterns in data, enabling those models to account for non-linear relationships and subtle interactions between variables.

In some embodiments, the machine learning system may be trained using data associated with completed process flows. As used in the present disclosure, a completed process flow refers to a process flow describing an incident that has been resolved. In some embodiments, data from completed process flows may be used to generate labels for training a machine learning model. By leveraging completed process flows, the labels provide a more accurate ground truth or correct output for training machine learning systems than data associated with incomplete or ongoing process flows. Consequently, in some instances, the trained machine learning systems may achieve improved accuracy by comparing predictive results against these more precise training labels generated using data associated with one or more completed process flows.

In some embodiments, machine learning systems may be trained to generate predictions using a subset of data extracted from the data associated with one or more completed process flows. In some embodiments, the subset of data may be defined by a predetermined time range cutoff, representing a portion of the total time taken to resolve an incident associated with a completed process flow. For example, the completed process flow may take two weeks to reach resolution, and the subset of data may indicate one or more events, activities, etc. that occurred during the first week of the total two-week period.

In some embodiments, the subset of data may be used to generate features, which may be represented as corresponding feature vectors. In some embodiments, the feature vectors may be employed to train machine learning models, neural networks, and the like to predict behavior associated with one or more ongoing process flows. In some embodiments, by training machine learning models using features generated based on the subset of data corresponding to the completed process flow, the trained machine learning models may more accurately predict future behavior of an analogous ongoing process flow. In some embodiments, the predicted future behavior may correspond to an ongoing process flow that has reached a similar point in time as that defined by the predetermined time range cutoff.

In some embodiments, a machine learning system may include multiple machine learning models, each trained using different subsets of data associated with different predetermined time range cutoffs associated with completed process flows. In some embodiments, by using different predetermined time range cutoffs for training, respective models may specialize in predicting behavior associated with ongoing process flows at specific stages. For example, an ongoing process flow may correspond to an incident that has not been resolved for two weeks, then three weeks, then four weeks. Three different machine learning models may be trained: one at a two-week time range cutoff, a second at a three-week time range cutoff, and a third at a four-week time range cutoff. Continuing the example, by using three different models, the machine learning system may be better equipped to accurately predict behavior of the ongoing process flow based on a length of time that has passed without resolving the incident associated with the ongoing process flow.

In some embodiments, the machine learning models may be improved by enabling them to perform analyses that were previously not possible or previously inaccurate. These improvements may be achieved by addressing the challenge of deconstructing, labeling, and extracting data from completed process flows in a manner that facilitates the transformation and/or generation of training data for the machine learning models. In some embodiments, the transformation and/or generation of the training data based on the completed process flow data may allow the machine learning models trained using the training data to predict outcomes for ongoing and future process flows with improved accuracy.

In some embodiments, the system may solve the problem of transforming completed, historical process flow data into actionable training data for machine learning models. By breaking down completed process flows, assigning labels to relevant components, and extracting pertinent data within specified time ranges, the system may generate a rich dataset for training.

In particular, in some embodiments, the training data used to train the machine learning models described in the present disclosure may undergo specific improvements and transformations to enable more accurate prediction of future behavior in ongoing process flows. For example, the improvements may include data cleaning to remove noise and inconsistencies, feature engineering to create more informative attributes, data augmentation to increase the diversity of training samples, and normalization techniques to standardize the scale of different features. Additionally or alternatively, the training data may be temporally segmented to capture time-dependent patterns, with relevant historical context incorporated through sliding window approaches or recurrent neural network architectures. These transformations to the training data may allow the machine learning models to better capture complex relationships and temporal dynamics within process flows, potentially leading to more robust and accurate predictions of future behavior.

In some embodiments, transforming and/or generating the training data in the manner described herein may enable the machine learning models to learn from past incidents and apply that knowledge to predict outcomes in ongoing or future process flows, potentially improving incident resolution efficiency and decision-making processes.

Additionally or alternatively, in some embodiments, the transformation and/or generation of the training data may be performed via one or more specialized techniques that may allow or enable a computing system to take general process flow data (e.g., completed process flow data) and transform it into training data. In some embodiments, the specialized techniques described herein may utilize a combination of rule-based algorithms and statistical methods to identify patterns and relationships within the process flow data. The computing system may apply these algorithms to parse through the data, identify key events or milestones, and extract meaningful features that represent the underlying structure of the process flow. Additionally, the technique may incorporate domain-specific knowledge to ensure that the generated training data accurately captures the nuances and complexities of a particular ongoing process flow being analyzed and/or behavior of the ongoing process flow that may be predicted.

Embodiments of the present disclosure will be explained with reference to the accompanying drawings.

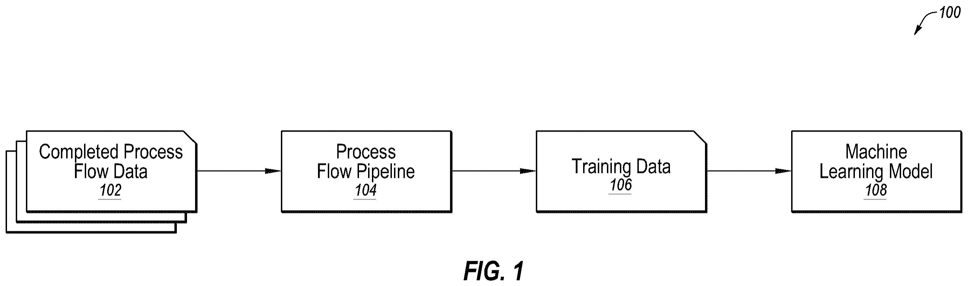

FIG. 1 illustrates an environment 100 related to training a machine learning model 108 to predict future behavior of existing or ongoing process flows, according to one or more embodiments of the present disclosure. In the illustrated example, the environment 100 may include a process flow pipeline 104 and a machine learning model 108. In some embodiments, the process flow pipeline 104 may be configured to receive completed process flow data 102 and generate training data 106 to train the machine learning model 108.

The completed process flow data 102 may include any data that is associated with completed process flows. As used in the present disclosure, a completed process flow is a description of events that correspond to an incident that has been resolved.

In some embodiments, the completed process flow data 102 may include data associated with an incident, which may refer to any category of occurrence, condition, or situation that may be resolved using action or intervention. In some embodiments, an incident may include a category describing multiple occurrences. For example, in the context of customer service, the incident may include a customer's device that may not be functioning properly. Continuing the example, it may be that the customer's device has multiple things wrong that need service (e.g., a broken screen, missing or broken sensors, etc.), but the overall incident-the customer's device-is not resolved unless and until the device is fixed or replaced. Additionally or alternatively, an incident may refer to one situation or occurrence. For example, in the context of pedestrian transport using scooters, an incident may include a single ride on the scooter from a beginning location to a destination location. As an additional example, an incident may include a car rental, where the incident may include any events, state changes, activities, etc. that may occur from pickup of the rental car to dropping off the rental car.

In some embodiments, the completed process flow data 102 may include data associated with resolving an incident. In some embodiments, resolution of an incident may be defined in accordance with a predefined set of principles or criteria established to ensure consistency and effectiveness. For example, in the context of customer service involving a malfunctioning device, the resolution may be explicitly defined as the device being restored to proper functioning or being replaced with a new, different, or refurbished unit. In some embodiments, the resolution of an incident may include more complex principles. For example, the predefined principles may incorporate customer satisfaction metrics, such as verifying the resolution has met or exceeded the customer's expectations.

Additionally or alternatively, resolution criteria may be defined by temporal thresholds, where an incident may be considered resolved if a specified period has elapsed without further action or recurrence of the issue. For instance, in automated systems monitoring operational stability, an incident may be deemed resolved if no error or alert is triggered within a defined window of observation, such as 72 hours after the last corrective action.

In some embodiments, the process flow data 102 may additionally include data associated with events or activities corresponding to incidents. Events or activities may include any actions, changes, or occurrences that take place in relation to an incident. In some embodiments, events may include actions undertaken to address the incident, such as diagnostic testing, corrective repairs, or stakeholder communications.

In some embodiments, events and/or activities associated with an incident may move the incident towards or away from resolution. Additionally or alternatively, activities and/or events may not have an impact on whether an incident moves toward resolution or away from resolution; instead, the activities or events may describe an occurrence that may have taken place that relates to the incident.

For example, an incident may include a technical problem associated with a software program. Continuing the example, events or activities associated with the incident may include running system diagnostics, applying a software patch, and/or replacing a defective hardware component.

As an additional example, an incident may include a customer related issue-e.g., a problem that a customer may have raised in a call with a representative. Continuing the example, events and/or activities may include reaching out to the customer for additional details, escalating the issue to a specialized team, and/or issuing a refund.

In some embodiments, events may additionally include state changes, where state changes may indicate transitions in status or condition of the incident. In some embodiments, state changes may provide a high-level view of progress, such as moving from an "open" state to "in-progress" or "resolved" state. For example, a technical issue initially flagged as "unresolved" might transition to "diagnosed" following a root cause analysis, and subsequently to "resolved" once a fix has been implemented. Similarly-as another example-a customer complaint may progress from "submitted" to "under review" to "closed" after the issue has been addressed to the customer's satisfaction.

In some embodiments, a state change may be accompanied by an event or multiple events. Additionally or alternatively, a state change may not be accompanied by an event. For example, an incident may transition from a "pending" state to a "closed" state due to inactivity.

In some embodiments, while described with reference to exemplary industries, the completed process flow data 102 including, for example, incidents, events, activities, state changes, and the like may arise in a variety of industries, domains, and/or environments, including but not limited to technical systems, business processes, security contexts, customer interactions, to name a few.

In some embodiments, the completed process flow data 102 may be associated with one completed process flow-e.g., one process flow describing a single incident that has been resolved. In some embodiments, the completed process flow data 102 may include data associated with multiple completed process flows-e.g., a database storing data associated with multiple completed process flows. In some embodiments, the completed process flow data 102 may be sent to and/or obtained by the process flow pipeline 104.

The process flow pipeline 104 may include any suitable system, apparatus, or device configured to receive or otherwise obtain the completed process flow data 102. In some embodiments, the process flow pipeline 104 may be a stand-alone system. Additionally or alternatively, the process flow pipeline 104 may be included in one or more other systems. Additionally or alternatively, the process flow pipeline 104 may direct one or more other systems to perform operations.

In some embodiments, the process flow pipeline 104 may be configured to receive or otherwise obtain the completed process flow data 102. In some embodiments, the process flow pipeline 104 may be sent the completed process flow data 102 from one or more other systems. Additionally or alternatively, the process flow pipeline system 104 may be configured to access and/or extract the completed process flow data 102 from one or more databases and/or other data repositories.

In some embodiments, the process flow pipeline 104 may be configured to perform one or more pre-processing operations on the completed process flow data 102. In some embodiments, the one or more pre-processing operations may include cleaning, transforming, and/or organizing the completed process flow data 102 into a structured format that may be suitable for training the machine learning model 108. In some instances, preprocessing may improve data consistency and reliability, decreasing errors or inconsistencies that may compromise the completed process flow data 102, analytical outcomes, or eventual accuracy of the machine learning model 108.

In some embodiments, the preprocessing operations may include data cleaning, which may include identification and rectification of errors, inconsistencies, and/or incomplete entries in the completed process flow data 102. In some embodiments, data cleaning may include removing duplicate records, filling in missing values, correcting anomalies, or ensuring consistent units of measurement. In some embodiments, data cleaning may also include eliminating or decreasing outliers that may otherwise distort downstream analyses. Additionally or alternatively, data cleaning may include consolidating and aligning disparate datasets by resolving schema differences, addressing overlapping or conflicting entries, and/or normalizing data formats, such as increasing the consolidation of units across sources.

In some embodiments, the preprocessing operations may include one or more transformation operations. In some instances, transformation operations may include rescaling numerical values, encoding categorical variables, and generating derived attributes, such as ratios or averages. In some embodiments, standardizing and normalizing techniques may improve consistency in the completed process flow data 102 by adjusting data values to a common range or distribution. In some embodiments, one or more noise reduction operations may remove irrelevant and/or redundant information, such as smoothing fluctuations in time-series data.

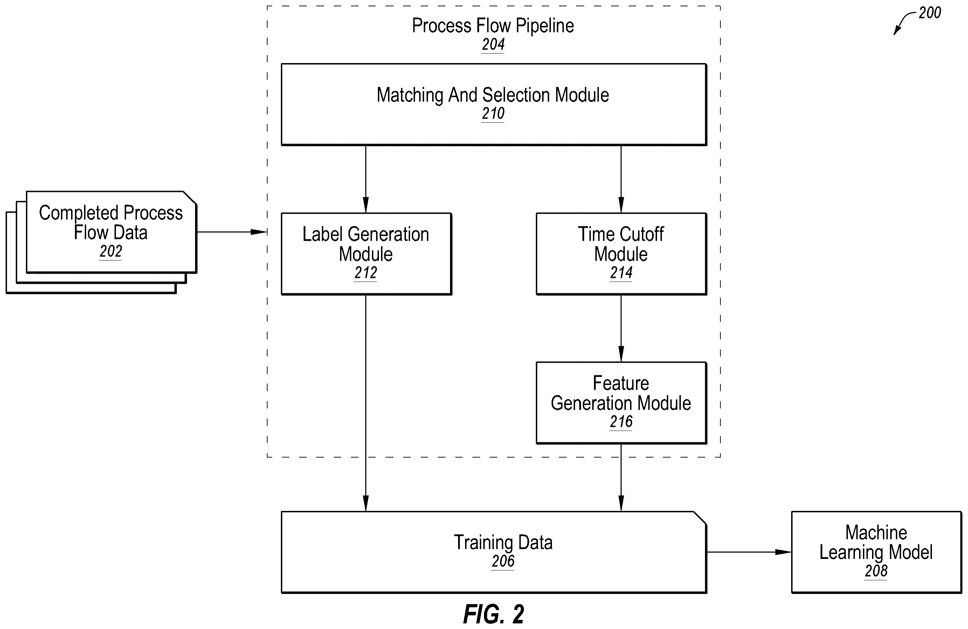

Additionally or alternatively, preprocessing operations may include feature selection and engineering, which may focus on identifying and constructing relevant attributes included in the completed process flow data 102 to improve training and eventual performance of the machine learning model 108. In some embodiments, feature selection and engineering may include creating interaction terms between variables, aggregating data over time, filtering out less informative features using statistical metrics, etc. In these or other embodiments, preprocessing operations-including feature selection and engineering processes-may be described and/or illustrated further in the present disclosure such as, for example, with respect to the process flow pipeline 204 FIGs. 2-3C.

In some embodiments, the process flow pipeline 104 may be configured to generate the training data 106 that may be sent to the machine learning system 108. In some embodiments, the training data 106 may include data structured and/or configured to train the machine learning model 108.

In some embodiments, the training data 106 may include features and/or labels that may have been generated in the process flow pipeline 104. In some embodiments, the training data 106 may include one or more features or data that represents the one or more features such as, for example, numerical representations of generated features, feature vectors, and other data structures.

Additionally or alternatively, the training data 106 may include one or more labels or other target variables. In some embodiments, the training data 106 may include data representing the one or more labels or target variables that may be used as ground truth for training the machine learning model 108. In some examples, the training data 106 may be tagged or labeled-e.g., where the machine learning model 108 may be trained using supervised learning. In some other examples, the training data 106 may not be tagged and/or pre-processed-e.g., where the machine learning model 108 may not use supervised learning. In some embodiments, the training data 106 and the generation of the training data 106 may be described and/or illustrated further in the present disclosure such as, for example, with respect to FIGs. 2-5.

In some embodiments, the training data 106 may be sent to the machine learning system 108.

The machine learning model 108 may include a system that may be trained to process input data and make predictions based on features and labels. The machine learning model 108 may be designed to operate using one or more algorithms such as regression, classification, or neural networks. In some embodiments, the machine learning model 108 may function independently or be integrated with other models in a larger framework. In some embodiments, the machine learning model 108 may include an architecture including one or more layers, nodes, and/or parameters that may adjust based on the training process, allowing the machine learning model 108 to learn complex patterns included in data such as, for example, the training data 106.

In some embodiments, the machine learning model 108 may include architectures and neural networks specifically tailored to make predictions about process flows. For example, recurrent neural networks (RNNs) and long short-term memory (LSTM) networks may be configured to analyze sequential data to identify patterns and trends in operational workflows. Similarly, in some embodiments, one or more reinforcement learning models may be applied to simulate decision-making within dynamic processes, which may enable the model/system to recommend or implement strategies to improve efficiency or minimize risks. Additionally or alternatively, the machine learning model 108 may include one or more graph neural networks (GNNs) which may be employed to model complex relationships within process flows, such as dependencies between interconnected components or nodes.

In some embodiments, the machine learning model 108 may be configured to be trained using the training data 106 that may be generated based on the completed process flow data 102. In some embodiments, training may be executed according to any one or more classes of machine learning techniques, including, without limitation, classes such as: supervised training, semi-supervised training, unsupervised training, self-learning, reinforcement learning, federated learning, transfer learning, feature learning (including principal component and cluster analyses), multi-linear subspace learning, manifold learning, representation learning (including spare dictionary learning), rule-based machine learning, anomaly detection, and any other variants or combinations.

In some embodiments, the machine learning model 108 may be trained to predict behavior associated with one or more ongoing process flows. In some embodiments, by training the machine learning model 108 using data associated with completed process flow data 102, the machine learning model 108 may be configured to generate more accurate predictions about future behavior of ongoing process flows than predictions made, for example, using one or more static statistical modeling methods or approaches.

In some embodiments, training the machine learning model 108 may include exposing the machine learning model 108 to labeled data in order to improve an ability of the machine learning model 108 to make accurate predictions on new data-e.g., data corresponding to future, ongoing process flows. In some embodiments, the training process may include iteratively adjusting internal parameters of the machine learning model 108 based on difference between predictions of the machine learning model 108 and known correct outputs-e.g., labels-associated with the training data 106. In some embodiments, as the machine learning model 108 processes more training examples using the training data 106, the machine learning model 108 may learn to recognize patterns and relationships in the completed process flow data 102 that may allow the machine learning model 108 to generalize to new inputs such as, for example, future, ongoing process data.

In some embodiments, during the training process, the machine learning model 108 may undergo internal modifications to improve its predictive capabilities. The training process may involve adjusting parameters, weights, and biases included in the machine learning model 108 based at least on the training data 106, including corresponding labels and features. In some embodiments, the training and/or adjustment processes may be iterative, transforming and/or refining internal representations and decision-making mechanisms of the machine learning model 108.

In some embodiments, the machine learning model 108 may use and/or include various optimization algorithms that may serve to decrease differences between predictions made by the machine learning model 108 and actual target variables represented by the labels. In some embodiments, these optimization processes may include techniques such as gradient descent, which may iteratively update parameters of the machine learning model 108 which may help to reduce prediction errors. As the training progresses, the machine learning model 108 may develop more sophisticated internal representations of the input features and relationships of the features to the target variables represented by the labels included in the training data 106.

In some embodiments, training the machine learning model 108 may improve an ability to generalize from the training data 106 to new examples. This improvement may be reflected in internal structure of the machine learning model 108, which may become more refined and better suited to capturing the underlying patterns and relationships in the completed process flow data 102. In some embodiments, by training the machine learning model 108, the machine learning model 108 may be better equipped to make accurate predictions on future ongoing process flows, having learned from the characteristics and outcomes of completed process flows included in the completed process flow data 102.

FIG. 2 illustrates an example environment 200 including a system designed to generate labels and features to train a machine learning model 208, according to one or more embodiments of the present disclosure. The example environment 200 may include a process flow pipeline 204 that may be configured to generate training data 206 based on completed process flow data 202 to train a machine learning model 208. As described and/or illustrated in FIG. 2, the completed process flow data 202, the training data 206, and the machine learning model 208 are the same as and/or analogous to the completed process flow data 102, the training data 106, and the machine learning model 108 described and/or illustrated further in the present disclosure, such as, for example, with respect to FIG. 1.

The process flow pipeline 204 may include any suitable system, apparatus, or device configured to receive or otherwise obtain the completed process flow data 202 and/or generate training data 206 to train the machine learning model 208. In these or other embodiments, the process flow pipeline 204 may be the same as and/or analogous to the process flow pipeline 104 described and/or illustrated further in the present disclosure such as, for example, with respect to FIG. 1.

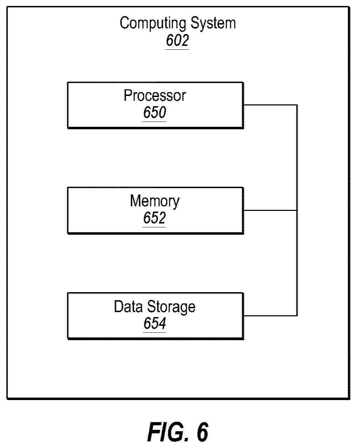

The process flow pipeline 204 includes-in the example environment 200-a matching and selection module 210, a label generation module 212, a time cutoff module 214, and a feature generation module 216, each of which is configured to perform one or more operations. In some embodiments, one or more of these modules may be implemented using hardware including one or more processors, central processing units (CPUs), graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), and/or other processor types. In some instances, one or more of these modules may be implemented using a combination of hardware and software. In the present disclosure, operations described as being performed by a respective module may include operations that the respective module may direct a corresponding computing system to perform. In these or other embodiments, one or more of these modules may be implemented by one or more computing devices, such as that described in further detail with respect to FIG. 6.

In some embodiments, the process flow pipeline 204 may receive and/or otherwise obtain the completed process flow data 202. One or more of the modules (e.g., the matching and selection module 210, the label generation module 212, the time cutoff module 214, and the feature generation module 216) may perform one or more operations on the completed process flow data 202 to generate training data 206.

For example, the modules may be configured to perform one or more preprocessing operations on the completed process flow data 202. These operations may include cleaning, organizing, and transforming the data to prepare it for analysis or to enable the generation of labels and features for training one or more machine learning models. Preprocessing may improve data consistency and reliability, and may decrease errors or inconsistencies that may compromise the completed process flow data 202, analytical outcomes, and/or eventual accuracy of the machine learning model 208. In some embodiments, the preprocessing operations that may be performed by one or more of the modules may be described and/or illustrated further in the present disclosure such as, for example, with respect to the process flow pipeline 104 in FIG. 1.

In some embodiments, the matching and selection module 210 may be configured to perform one or more operations on the completed process flow data 202. In some embodiments, the one or more operations may include one or more matching operations and/or selection operations.

In some embodiments, the matching operations may include processes of aligning and integrating the completed process flow data 202 from different sources or formats to create a more unified and a more consistent dataset.

In some embodiments, matching operations may include identifying relationships between disparate data elements, resolving duplicates, improving compatibility across data structures, among other pre-processing operations. In some embodiments, matching operations may include processes aimed at aligning and integrating data from diverse sources or formats to create a more unified and consistent dataset or multiple datasets. In some embodiments, matching operations may include identifying and reconciling relationships between disparate data elements, which may improve harmonization of data and information from various sources into a cohesive structure. For example, matching may include resolving duplicates by identifying and merging redundant records, standardizing data representations to ensure compatibility across differing data structures, and reconciling inconsistencies or conflicts within the completed process flow data 202.

In some embodiments, the matching operations may also include schema alignment, where fields or attributes from different sources are mapped to a common framework. Additionally or alternatively, the matching operations may include establishing relationships between events, activities, or other characteristics of the completed process flow data 202 that may be inherently connected but may appear fragmented across datasets. For example, sequential steps in a manufacturing or business workflow may be linked to create a coherent representation of a corresponding process.

In some embodiments, the matching process may enhance the interoperability and utility of the completed process flow data 202. Additionally or alternatively, the matching operations may improve readiness of the completed process flow data 202 for downstream tasks, such as feature extraction, labeling, and/or analysis.

In addition, the matching and selection module 210 may be configured to perform one or more operations related to data selection. For example, in the context of the completed process flow data 202, the selection process may involve identifying and retaining critical data points or features that are directly relevant to the task of training the machine learning model 208. For example, if the completed process flow data 102 contains timestamps for task completion, machine utilization rates, and error logs, the matching and selection module 210 may prioritize selecting features such as average task duration, utilization trends during peak hours, and error frequency under specific conditions. Continuing the example, the matching and selection module 210 may select these features because they may be among those that may affect the performance of the machine learning model 208.

In some embodiments, the selection processes may reduce noise in the completed process flow data 202 by, for example, decreasing or eliminating redundant information. For example, if the completed process flow data 202 includes duplicate records of process completion from both manual and automated systems, the matching and selection module 210 may select automated entries that may decrease noise associated with human error.

Additionally or alternatively, the matching and selection module 210 may be configured to filter out irrelevant data, such as process flow data for unrelated workflows or tasks. In some embodiments, filtering out irrelevant data may increase a likelihood that the completed process flow data 202 is focused on operations that may be pertinent to a use of the machine learning model 208.

For example, if a goal is to train the machine learning model 208 to predict delays in a specific production line, the matching and selection module 210 may be configured to exclude data from other production lines or unrelated quality control logs that do not directly impact the process flow of interest. In some instances, by curating a streamlined and task-specific dataset, the selection processes performed by the matching and selection module 210 may improve the quality of the completed process flow data 210 for eventual training, which may lead to improving an accuracy and reliability of the machine learning model 208 that may be trained using the resulting data. In some embodiments, the matching and selection module 210 may prepare the completed process flow data 202 for one or more additional operations, such as, for example, feature and/or label generation which may be performed by the label generation module 212, the time cutoff module 214, and/or the feature generation module 216.

The label generation module 212 may be configured to generate and/or determine one or more labels corresponding to the completed process flow data 202. In the context of the completed process flow data 202, the one or more labels may represent outcomes or characteristics of the associated process that may serve as target variables for training the machine learning model 208. In some embodiments, the labels generated using the label generation module 212 may be important for enabling the machine learning model 208 to learn patterns in the process flow associated with the completed process flow data 202 and make predictions about similar data corresponding to one or more future ongoing process flows.

For example, one or more labels that may be derived from the completed process flow data 202 may include one or more classifications-e.g., binary classifications-such as whether a particular process flow resulted in "successful completion" or "process failure." In some embodiments, the labels may include multiclass labels that may categorize process flows into states like "on-time," "delayed," or "halted due to resource unavailability."

In some embodiments, labels may include numeric labels that may quantify one or more metrics associated with the completed process flow data 202. For example, the labels may include a total time taken to complete the process, a number of errors or interruptions encountered, or an efficiency score of the workflow. As another example, in an assembly line context, the prediction target could be the estimated time to resolve a disruption, expressed as a continuous or stepwise continuous value, based on the analysis of the corresponding completed process flow data 202.

In some embodiments, the label generation module 212 may use raw data directly from the completed process flow data 202. Additionally or alternatively, the label generation module 212 may determine, generate, and/or synthesize labels through one or more computation and/or analysis operations that may be performed on data included in the completed process flow data 202. For example, a label indicating "average task efficiency" may be determined from start and end timestamps across events associated with the completed process flow data 202.

In some embodiments, the label generation module 212 may be configured to generate one or more labels based on what the one or more labels may be used to train the machine learning model 208 to recognize or predict. For example, in the context of the completed process flow data 202 including data associated with an car rental, where each incident may be defined as a single trip in the rental car, "overall trip time" may be a label that may be generated using the label generation module 212. Continuing the example, overall trip time may be a characteristic of each incident that the machine learning model 208 may be trained to predict. As such, the label generation module 212 may generate labels associated with overall trip time to train the machine learning model 208 to predict, for example, overall trip time in a future, analogous ongoing process flow.

In some embodiments, the label generation module 212 may be configured to perform one or more technical processes to generate labels from the completed process flow data 202. In some embodiments, these technical processes may include identifying key characteristics, outcomes, or resolution types that may serve as meaningful target variables for the machine learning model 208. In some instances, one or more processes related to label generation may utilize natural language processing techniques to extract relevant information from textual descriptions, as well as statistical analysis of numerical data associated with the incident. Additionally or alternatively, domain-specific knowledge and predefined taxonomies may be incorporated in the one or more processes related to label generation to ensure the labels accurately represent the important aspects of the incident resolution process. These generated labels may then be used in conjunction with the extracted features to train the machine learning model 208 for predicting future behavior of ongoing process flows.

For example, one such process may include analyzing incident resolution details corresponding to the completed process flow data 202 to identify one or more key characteristics that may serve as target variables for the machine learning model 208. In some embodiments, these characteristics may be extracted from various data fields associated with the completed process flow data 202, such as incident type, resolution time, resources utilized, or customer satisfaction metrics. In some embodiments, the extracted characteristics may be encoded into a standardized format suitable for machine learning, such as one-hot encoding for categorical variables or normalization for numerical values.

Another technical process in label generation may involve temporal analysis of the completed process flow data 202. The temporal analysis may include examining the timeline of events within the incident resolution process to identify milestones or decision points. In some embodiments, these temporal markers may be used to create time-based labels, such as whether the incident was resolved within a specific time threshold or if certain actions were taken within predefined time windows. The resulting time-based labels may be added to the training data set, providing the machine learning model 208 with temporal context for predicting future behavior in ongoing process flows.

In some embodiments, the label generation module 212 may be configured to communicate, send, or otherwise package the generated labels with the training data 206. Additionally or alternatively, one or more other systems may be configured to generate the labels using the training data 206. For example, in the context of generating labels corresponding to one or more customer service processes, one or more of the labels may include "customer satisfaction" which may be self-reported by one or more of the customers independent from the process flow pipeline 204 and/or the label generation module 212. Additionally or alternatively, the label generation module 212 may be configured to direct one or more other systems to generate, package, and/or communicate the labels associated with the training data 206.

The time cutoff module 214 may be configured to sort, filter, and/or limit data included in the completed process flow data 202 upon which features may be generated. In some embodiments, the time cutoff module 214 may extract a subset of data included in the completed process flow data 202. In some embodiments, the subset of data may be associated with one or more events included in a completed process flow where the one or more events may occur within a predefined time range cutoff. In some embodiments, the predefined time range cutoff may be defined as a subset of the total time from a beginning of an incident to a resolution of an incident.

For example, in the context of car rentals where an incident corresponds to a rental period from starting the rental to returning the rental car, the total rental period time (e.g., from pickup to drop off) may be seven days. Continuing the example, the completed process flow data 202 associated with the incident may include data associated with the total rental period-seven days. Further continuing the example, the time cutoff module 214 may be configured to extract a subset of data that may correspond to a first three days of the total rental period corresponding to the rental period.

In some embodiments, the time cutoff module 214 may be configured to extract a subset of data based on a time range of interest. Additionally or alternatively, the time cutoff module 214 may be configured to extract a subset of data based on a number of events, activities, stages, etc. included in the completed process flow data where the number of events, activities, stages, etc. is smaller than the total number of events, activities, stages, etc. that may correspond to the completed process flow.

In some embodiments, the time cutoff module 214 may extract multiple subsets of data included in the completed process flow data 202. In some embodiments, the time cutoff module 214 may extract multiple subsets of data associated with a single completed process flow. In some embodiments, the time cutoff module 214 may extract a subset of data associated with a start of an incident to a particular cutoff time.

For example, again in the context of a process flow associated with a car rental where the incident described by the process flow is a rental period, multiple subsets of data may be extracted using the time cutoff module 214. Continuing the example, the time cutoff module 214 may be configured to extract data corresponding to each subsequent day of the rental periode.g., data corresponding to the first day, the second day, the third day corresponding to the rental period, and so on. Additionally or alternatively, the time cutoff module 214 may extract data corresponding to multiple shares of the total time. For example, in the same context of a process flow associated with a seven-day rental period, the time cutoff module 214 may extract data associated with the first day of the rental period, the first two days of the rental period, the first three days of the rental period, and so on.

In some embodiments, the predefined time range cutoff or the multiple predefined time range cutoffs may be determined based on what the machine learning model 208 may be trained to perform. For example, the machine learning model 208 may be trained to predict behavior of process flows that have reached a particular time range, event range, and/or activity range cutoff. For example, the machine learning model 208 may be trained to predict behavior associated with process flows that have reached a particular time range cutoff. For example, one day into a rental period with a rental car.

In some embodiments, by extracting subsets of data that may indicate events, activities, stages, etc. associated with a process flow, the extracted subsets of data may be used to generate one or more features which may be used to train the machine learning model 208. In some embodiments, one or more features may be generated using the feature generation module 216.

The feature generation module 216 may be configured to generate one or more features corresponding to the completed process flow data 202 using one or more subsets of data extracted by the time cutoff module 214. In some embodiments, features may represent measurable or identifiable attributes derived from extracted data of the completed process flow data 202. In some embodiments, the generated features may serve as building blocks for downstream analytical or predictive models. For example, features may include statistical summaries (e.g., averages, standard deviations), categorical classifications, temporal markers, or any other characteristic that conveys relevant information about the process flow.

In some instances, features may be represented as numerical or categorical values within a structured dataset. In some embodiments, a feature may correspond to an aspect, characteristic, or dimension of the underlying data and may be organized in the form of a feature vector. In the context of the completed process flow data 202, the feature generation module 216 may transform subsets of data extracted by the time cutoff module 214 into a series of feature vectors. Each feature vector may encode and/or encapsulate multiple characteristics or attributes corresponding to the subsets of data extracted by the time cutoff module 214, transforming complex, often unstructured data into a format that the machine learning model 208 may be configured to ingest and/or analyze. In some embodiments, the feature vectors may encode information such as timestamps, process durations, operational states, or any other relevant attributes of the process flow.

In some embodiments, the feature vectors may capture relevant information in a compact and standardized form. By representing data as vectors, the dimensionality and complexity of the input may be reduced, potentially improving the efficiency and performance of the learning process. In some embodiments, the feature vectors may also enable the machine learning model 208 to identify patterns, correlations, and relationships between different attributes, which may be essential for making accurate predictions or classifications. Additionally or alternatively, the use of feature vectors may facilitate the application of various mathematical operations and distance metrics, which may be fundamental to many machine learning algorithms that may be used in the machine learning model 208.

While the feature generation module 216 may be configured to generate one or more features in a wide variety of ways and using various methods, the present disclosure describes some examples of feature generation in more detail. Some examples of feature generation methods may include direct methods, time-delta methods, calendar-based methods, duration-based methods, activity-based methods, and/or a state-graph based methods.

In some embodiments, one or more direct methods of feature generation may be employed. In some embodiments, direct methods for feature generation may include extracting attributes directly from the completed process flow data 202. In this approach, features may be derived directly from data, focusing on capturing primary characteristics that are inherently present in the dataset. For example, events, activities, stages, etc. associated with the subset of data from which features may be generated may be categorized based on common characteristics shared between events, activities, stages, etc. Continuing the example, the most common event, activity, stage, etc. may be recorded as a feature. Additionally or alternatively, the most common event, activity, stage, etc. based on a percentage of a total number of events, activities, stages, etc. may be recorded as a feature.

In some embodiments, one or more time-delta methods of feature generation may be employed. In some embodiments, time-delta methods for feature generation may include deriving features based on calculating differences or intervals between temporal events within a subset of data included in the completed process flow data 202. In some embodiments, the time-delta methods may emphasize one or more temporal relationships between events or other data points, which may capture dynamic aspects of the subset of data included in the completed process flow data 202.

In some embodiments, one or more of the time-delta methods may calculate time elapsed between successive events, duration of events, and/or intervals between events and/or stages. Additionally or alternatively, the time-delta values may be used to construct feature vectors that may provide insights into the timing, sequencing, or pace of operations.

In some embodiments, one or more calendar-based methods of feature generation may be employed. In some embodiments, calendar-based methods for feature generation may include generating features from subsets of data included in the completed process flow data 202 that may account for temporal patterns related to specific calendar attributes, such as days of the week, months, quarters, or seasons. In some instances, calendar-based feature generation may be useful for capturing seasonality or recurring trends in process flows that may be influenced by time-dependent factors. For example, features may be generated to reflect whether a process occurred on a weekday or weekend, during a holiday season, or in a specific fiscal quarter. Additional calendar-based features may include numerical representations of months (e.g., January as 1, February as 2) or binary indicators signaling whether an event aligns with a peak business period.

In some embodiments, by incorporating seasonal and temporal context, calendar-based feature generation methods may allow for identification of patterns that may correlate with external time-based influences, such as market demand fluctuations, staffing cycles, or environmental factors. Additionally or alternatively, calendar-based feature generation methods may account for periodic behaviors included in a process flow.

In some embodiments, one or more duration-based methods of feature generation may be employed. In some embodiments, duration-based feature generation methods may include deriving features by determining lengths of time associated with specific events, activities, stages, or transitions within the process. In some embodiments, duration-based methods may focus on quantifying how long various events associated with a particular process flow may take.

For example, features may include the total duration of the process, the time spent in each event, or the elapsed time between particular events and/or stages. In some instances, by generating features based on durations, this method may highlight or determine bottlenecks, inefficiencies, and/or variability in timing between events, activities, state changes, and the like in process flows. Additionally or alternatively, duration-based features may assist in identifying patterns or correlations between process duration and external factors such as resource allocation or workload.

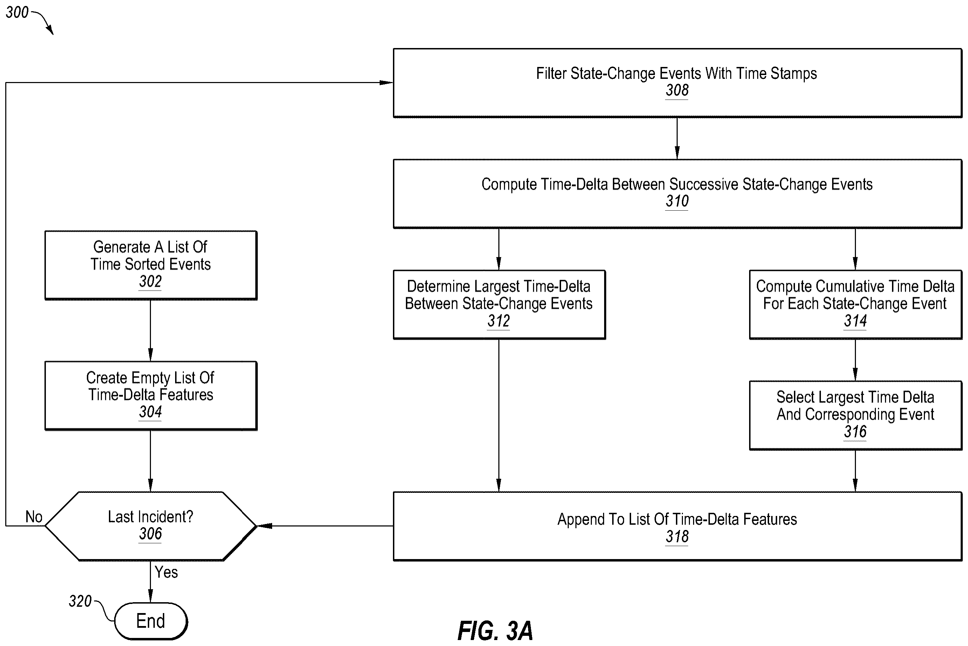

An example of a flowchart illustrating an example implementation of the duration-based method for generating one or more features may be described and/or illustrated with respect to FIG. 3A.

FIG. 3A illustrates a flowchart of an example method 300 of generating duration-based features as input to a machine learning model, in accordance with one or more embodiments of the present disclosure. The method 300 may be implemented by any suitable element of a system such as, for example, the process flow pipeline 104 of FIG. 1, the process flow pipeline 204, and/or the feature generation module 216 of FIG. 2. Although illustrated as discrete steps, various steps of the method 300 may be divided into additional steps, combined into fewer steps, or eliminated, depending on the desired implementation. Additionally, the order of performance of the different steps may vary depending on the desired implementation.

The example method 300 may include block 302. Block 302 may include generating a list of time sorted events included in a set of data. In some embodiments, the generated list may include a sequential grouping of events that may have occurred during a particular incident. In some embodiments, the list may include a sequential grouping of events that may have been included in a subset of data associated with a completed process flow. In some embodiments, for example, the list of time sorted events may include each event corresponding to a particular incident up to a cutoff time such as those described with respect to FIG. 2.

In some embodiments, the example method 300 may additionally include block 304 creating an empty list of time-delta features. In some embodiments, the generated empty list may be generated to be populated with one or more time duration-based features.

In some embodiments, the example method 300 may additionally include block 306. At block 306, it may be determined whether the incident associated with the list of time sorted events is the last incident included in the set of data. In instances where it is determined that the incident associated with the list of time sorted events is the last incident included in the set of data, the method 300 may proceed to block 320 where the method may end. In instances where it is determined that the incident associated with the list of time sorted events is not the last incident included in the set of data, the method 300 may proceed to block 308.

At block 308, events associated with a state change included in the set of data may be filtered based on corresponding time stamps. Upon determining respective time stamps corresponding to respective events associated with state changes in a process flow, the method 300 may proceed to block 310.

At block 310, the time delta may be computed and/or otherwise determined between successive events associated with state changes in the process flow. Upon determining or computing respective time deltas between successive events associated with state changes, the method may proceed to blocks 312 and/or 314.

At block 312, the largest time delta between events associated with state changes may be determined. In some embodiments, the largest time delta between events associated with state changes may determine at which state the corresponding incident remained in the longest. In some embodiments, the state associated with the largest time delta may be recorded as a feature. Additionally or alternatively, the largest time delta between events associated with a state change may also be recorded as a feature. In some embodiments, the features that may correspond to the largest time delta between events may improve identification of bottlenecks, outliers, and/or periods of inactivity in a particular process flow. In some embodiments, the method 300 may proceed to block 318.

Returning to block 314, at block 314, cumulative time deltas may be computed for each event associated with a state change. While block 312 may correspond to determining time deltas between events associated with state changes, block 314 identifies time delta between a time stamp associated with the inception of a particular process flow to each event associated with a state change. In some embodiments, determining cumulative time delta between the inception of an incident and each event associated with a state change may improve tracking of overall progress and/or understanding how time may be distributed across a sequence of events. In some embodiments, upon computing cumulative time delta for each event associated with a state change, the method 300 may proceed to block 316.

At block 316, the largest time delta and corresponding event may be selected and/or recorded as a feature or multiple features. In some embodiments, the largest cumulative time delta may be selected and recorded as a feature. Additionally or alternatively, the state associated with the largest cumulative time delta may be selected and recorded as a feature. In some embodiments, upon selecting and recording features associated with the cumulative time delta determinations may proceed to block 318.

At block 318, one or more of the features determined and/or calculated in the method 300 may be included in the list of time-delta features. In some embodiments, the one or more features may include the state associated with the largest time delta, the largest time delta between events associated with a state change, the largest cumulative time delta and/or the state associated with the largest cumulative time delta may be appended to the list of time-delta features.

In some embodiments, upon appending the features to the list of time-delta features, the method 300 may proceed to block 306. In instances where it is determined that the incident associated with the list of time sorted events is the last incident included in the set of data, the method 300 may proceed to block 320 where the method may end. In instances where it is determined that the incident associated with the list of time sorted events is not the last incident included in the set of data, the method 300 may proceed to block 308 where events associated with another incident may be filtered and the method 300 may continue to iterate until each incident has been analyzed.

Modifications, additions, or omissions may be made to the method 300 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

Returning to FIG. 2, the feature generation module 216 may additionally be configured to generate one or more features using the activity-based method. The activity-based method for feature generation may include deriving features from the completed process flow data 202 or subsets of the completed process flow data 202 by analyzing events included in a process flow or portions of the process flow. In some embodiments, the activity-based method may focus on capturing occurrence, frequency, sequence, or type of events that may define a process flow or portions of a process flow. For example, features may be generated to reflect the total count of events, the order in which events may have occurred, or the relative frequency of one event compared to others. Additional features may include indicators of whether certain critical or rare events may have been performed.

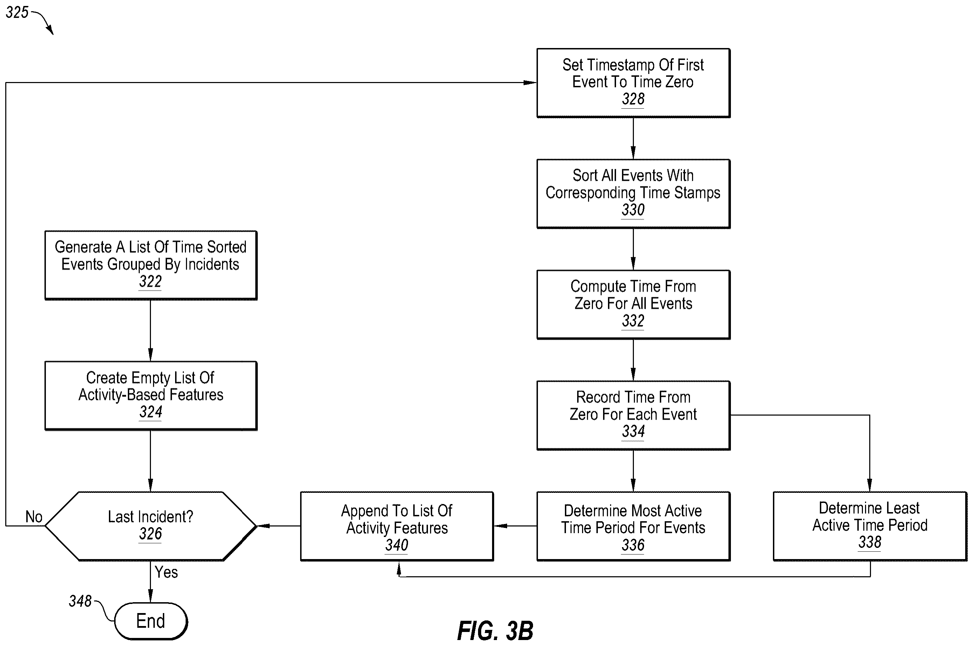

An example of a flowchart illustrating an example implementation of the activity-based method for generating one or more features may be described and/or illustrated with respect to FIG. 3B.

FIG. 3B illustrates a flowchart of an example method 325 of generating activity-based features as input to a machine learning model, in accordance with one or more embodiments of the present disclosure. The method 325 may be implemented by any suitable element of a system such as, for example, the process flow pipeline 104 of FIG. 1, the process flow pipeline 204, and/or the feature generation module 216 of FIG. 2. Although illustrated as discrete steps, various steps of the method 325 may be divided into additional steps, combined into fewer steps, or eliminated, depending on the desired implementation. Additionally, the order of performance of the different steps may vary depending on the desired implementation.

The example method 325 may include block 322, generating a list of time sorted events included in a set of data-e.g., subsets of the completed process flow data 102 and/or the process flow data 202 described and/or illustrated with respect to FIGs. 1 and 2. In some embodiments, the generated list may include a sequential grouping of events that may have occurred during a particular incident. In some embodiments, the list may include a sequential grouping of events that may have been included in a subset of data associated with a completed process flow.

In some embodiments, the example method 325 may additionally include block 324 creating an empty list of activity-based features. In some embodiments, the generated empty list may be generated to be populated with one or more time activity-based features.

In some embodiments, the example method 325 may additionally include block 326. At block 326, the method 325 may determine whether the incident associated with the list of time sorted events is the last incident included in the set of data. In instances where it is determined that the incident associated with the list of time sorted events is the last incident included in the set of data, the method 325 may proceed to block 348 where the method 325 may end. In instances where it is determined that the incident associated with the list of time sorted events is not the last incident included in the set of data, the method 325 may proceed to block 328.

At block 328, a time stamp corresponding to a first event associated with the list of time sorted events may be set to zero. In some embodiments, the first event may not be set to zero; instead, the first event may be recorded or set at any time stamp as long as the first event is noted or otherwise set as a starting point for an activity-based feature generation method. In some embodiments, the method 325 may continue to block 330 or block 338.

At block 330, all events associated with a particular incident may be sorted and/or assigned corresponding time stamps. In some embodiments, the time stamps assigned to each of the events may be based on the set time stamp corresponding to the first event.

At block 332, time from zero may be computed for all events associated with a particular incident. In some embodiments, the time determined may be determined from the set time stamp of the first event associated with the particular incident.

At block 334, the time from zero or the time from the set time stamp of the first event may be recorded. In some embodiments, the time from zero may be recorded along with corresponding events.

At block 336 most active time periods may be determined. In some embodiments, the most active period may be determined by a number of events that may occur within a set period of time. For example, the set period of time may be a 24-hour period of time. Continuing the example, the most active period may be characterized as the 24-hour period that includes the highest number of events. In some embodiments, the most active period may be determined by a number of events with shared characteristics occurring within a set time period. For example, the most active period may be defined by a set period of time that includes the largest number of events corresponding to a state change associated with the incident.

In some embodiments, both the number of events included in the most active time period and a number of events as a percentage of a total number of events that occur during the incident may be individual features. In some embodiments, both the number of events corresponding to a state change and the states before and after the most active state-change events may be determined to be features. In some embodiments, each of these features may be included in one or more feature vectors that may be used to train the machine learning model 208.

In some embodiments, the most active time period for events may be determined to be a feature or multiple features associated with the incident.

At block 338, a least active time period may be determined. In some embodiments, similar to the determination of the most active time period, a set time period with the least number of events may be determined to be the least active time period, which may serve as a feature associated with the incident. In some embodiments, the least active period may be determined by a lack of events with shared characteristics occurring within a set time period. For example, the least active period may be defined by a set period of time that includes the fewest number of events corresponding to a state change associated with the incident.

At block 340, the features determined at blocks 336 and 338 may be appended to the list of activity features. Upon appending the features to the list of activity features, the method 325 may proceed to block 326.

At block 326, the method 325 may determine whether the incident associated with the list of time sorted events is the last incident included in the set of data. In instances where it is determined that the incident associated with the list of time sorted events is the last incident included in the set of data, the method 325 may proceed to block 348 where the method 325 may end. In instances where it is determined that the incident associated with the list of time sorted events is not the last incident included in the set of data, the method 325 may proceed to block 328 where events associated with another incident may be filtered and the method 325 may continue to iterate until each incident has been analyzed.

Modifications, additions, or omissions may be made to the method 325 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

Returning to FIG. 2, the feature generation module 216 may additionally be configured to generate one or more features using state graph-based methods. In some embodiments, state graph-based methods for feature generation may include deriving features from the completed process flow data 202 or subsets of data included in the completed process flow data 202 by representing the process as a graph of interconnected states and transitions. In some embodiments, the state graph-based method may focus on capturing structural and relational aspects of processes, where a node in a graph may represent a unique state, and one or more edges between nodes may represent transitions or events that may result in changes in a state corresponding to the process flow.

In some embodiments, features generated through the state graph-based method may include metrics such as a number of states visited, a frequency of specific transitions, common transition paths, and/or identification of critical nodes (e.g., bottleneck states or high-frequency states). Additionally or alternatively, one or more features may include graph-based properties like path length, state transition probabilities, or network centrality measures that may reflect the connectivity and flow associated with the process flow.

For example, in the context of a customer service process flow represented as a state graph, the number of states visited might correspond to the various stages a customer interaction goes through, such as "initial inquiry," "agent assignment," "issue resolution," and "feedback collection." Continuing the example, frequency of specific transitions may capture how often customers move from "initial inquiry" to "issue resolution" without passing through "agent assignment," potentially indicating the effectiveness of self-service channels. Further, common transition paths may reveal that most interactions follow a sequence of "initial inquiry" to "agent assignment" to "issue resolution," while identification of critical nodes may highlight "agent assignment" as a bottleneck where delays may occur. In some instances, graph-based properties, such as path length, may measure an average number of transitions that may occur prior to issue resolution. In some instances, one or more network centrality measures may assist in identifying one or more states that may serve significant roles in overall process flows.

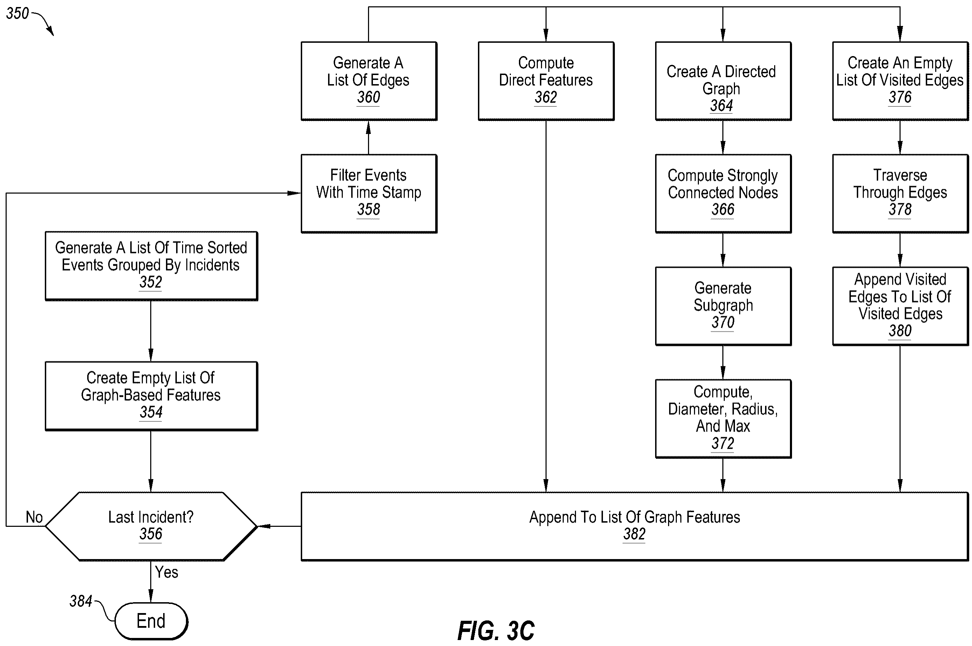

An example of a flowchart illustrating an example implementation of the state graph-based method 350 for generating one or more features may be described and/or illustrated with respect to FIG. 3C.

FIG. 3C illustrates a flowchart of an example method 350 of generating graph-based features as input to a machine learning model, in accordance with one or more embodiments of the present disclosure. The method 350 may be implemented by any suitable element of a system such as, for example, the process flow pipeline 104 of FIG. 1, the process flow pipeline 204, and/or the feature generation module 216 of FIG. 2. Although illustrated as discrete steps, various steps of the method 350 may be divided into additional steps, combined into fewer steps, or eliminated, depending on the desired implementation. Additionally, the order of performance of the different steps may vary depending on the desired implementation.

The example method 350 may include block 352. Block 352 may include generating a list of time sorted events included in a set of data-e.g., subsets of the completed process flow data 102 and/or the process flow data 202 described and/or illustrated with respect to FIGs. 1 and 2. In some embodiments, the generated list may include a sequential grouping of events that may have occurred during a particular incident. In some embodiments, the list may include a sequential grouping of events that may have been included in a subset of data associated with a completed process flow.

The example method 350 may include block 354, generating a list of graph features included in a set of data-e.g., subsets of the completed process flow data 102 and/or the completed process flow data 202 described and/or illustrated with respect to FIGs. 1 and 2. In some embodiments, the generated list may include a sequential grouping of events that may have occurred during a particular incident. In some embodiments, the list may include a sequential grouping of events that may have been included in a subset of data associated with a completed process flow.

In some embodiments, the example method 350 may additionally include block 356. At block 356, it may be determined whether the incident associated with the list of time sorted events is the last incident included in the set of data. In instances where it is determined that the incident associated with the list of time sorted events is the last incident included in the set of data, the method 350 may proceed to block 384 where the method 350 may end. In instances where it is determined that the incident associated with the list of time sorted events is not the last incident included in the set of data, the method 350 may proceed to block 358.

At block 358, events associated with a state change included in the set of data may be filtered based on corresponding time stamps. Upon determining respective time stamps corresponding to respective events associated with state changes in a process flow, the method 350 may proceed to block 360.

At block 360, a list of edges may be calculated or otherwise determined. An edge, in this context, may represent a connection or relationship between nodes in a graph, where the nodes correspond to entities, states, events, activities, etc. In some embodiments, the edges may specifically indicate relationships or dependencies between events that are part of an incident, such as causal links, temporal sequences, or hierarchical associations. In some embodiments, the nodes may indicate and/or correspond only to one or more states and/or state changes. The edges, in these embodiments, may specifically indicate relationships or dependencies between the states or state changes. For example, an edge may represent a progression from one event to another in a timeline or a dependency between two related events.

In some embodiments, the determined edges may provide a structural framework for analyzing the incident as a graph, which may enable the identification of patterns, correlations, or anomalies within the interconnected events. Upon generating a list of edges, the method 350 may proceed to one or more of blocks 362, 364, and 376 which are each described in turn.

At block 362, direct features may be computed or otherwise determined. In some embodiments, features may be derived directly from the structure and properties of the graph represented by the list of edges. In some embodiments, computational tools, such as NetworkX, may be employed to calculate these features. Examples of direct features include node degree (the number of connections a node has), edge weights (representing the strength or frequency of a relationship), clustering coefficients (indicating the tendency of nodes to form tightly connected groups), and graph centrality metrics (such as betweenness or closeness, which quantify the importance of nodes within the graph). In some embodiments, the generated features may be appended to the list of graph features at block 382.

At block 364, a directed graph may be created or otherwise generated. In some embodiments, the directed graph may be constructed using the list of edges, where each edge has an assigned direction that may indicate the flow or sequence of relationships between events, states, activities, etc. that may be considered "nodes." In some embodiments, the directed nature of the directed graph may enable representation of asymmetric relationships, such as cause-and-effect links, hierarchical dependencies, or temporal progressions. For example, in the context of an incident, a directed graph may capture the sequence of events corresponding to the incident. In some embodiments, tools such as NetworkX or similar graph libraries may be utilized to generate the directed graph, which may incorporate attributes like edge weights, time stamps, or other labels.

At block 366, one or more components associated with the directed graph may be determined. In some embodiments, components may refer to nodes or characteristics within the directed graph that exhibit specific structural or relational characteristics. For example, strongly connected nodes may be identified, where every node in a subgraph is reachable from every other node, reflecting tightly interlinked relationships. Additionally or alternatively, weakly connected nodes may be determined, where nodes are connected through edges without considering direction. In some embodiments, both strongly and weakly connected nodes provide valuable insights into the organization and clustering of the graph, such as identifying isolated processes, interdependent events, or key segments of an incident.

At block 370, one or more subgraphs may be generated based on the strongly connected nodes. In some embodiments, the one or more subgraphs may be created to isolate specific areas of interest within a graph, such as the strongly connected nodes identified at block 366. In some embodiments, the one or more subgraphs may be particularly useful for analyzing localized interactions, detecting self-contained workflows, or identifying segments of a system that operate independently.

At block 372, a diameter, radius, and maximum may be determined based on the one or more subgraphs. In some embodiments, the diameter, radius, and maximum may provide one or more features based on the one or more subgraphs. In some embodiments, the diameter may represent a longest shortest path between any two nodes in the subgraph, offering a measure of its maximum reach or extent. In some embodiments, the radius may be the shortest maximum distance from a single node to all other nodes in the subgraph, identifying its most centrally located node or "center." In some embodiments, the maximum may refer to the largest value of a particular graph property, such as node degree, edge weight, or another feature of interest. In some embodiments, the diameter, radius, and maximum may be features that may be added to the list of graph features at block 382.

At block 376, an empty list of visited edges may be created. The generation of an empty list of visited edges may be implemented using a data structure such as an array, a linked list, or a set. This data structure may be configured to store information about edges that have been traversed in the graph-based feature selection process. In some embodiments, the empty list of visited edges may initially be created with no elements, allowing for the subsequent addition of visited edges as the graph traversal progresses. In some embodiments, the empty list of visited edges may include a data structures such as, for example, one or more dynamic arrays, linked lists, and/or other set data structures.

In some embodiments, the empty list of visited edges may be configured to support various operations including, for example, adding a newly visited edge to the list, determining whether a particular edge has already been visited, determining to remove edges from the list in instances where backtracking is performed in a graph traversal algorithm. In some embodiments, the data structure corresponding to the empty list of visited edges may also be designed to store additional metadata about each visited edge, such as the time of visitation or any associated weights or attributes. In some instances, the additional metadata may be useful for more complex graph-based feature selection algorithms that may consider, for example, one or more edge properties in a decision-making process.

In some embodiments, creating the empty list of visited edges may also be created to use memory efficiently, particularly for large graphs with numerous edges. In some embodiments, bit vectors and/or bloom filters may be used to represent the set of visited edges in a compact manner.

At block 378, the edges may be traversed. In some embodiments, traversing the edges may include exploring connections between nodes in the graph to gather relevant information or to perform specific tasks, such as pathfinding or connectivity analysis. In some embodiments, during traversal, each edge may be followed from its source node to its target node, and the traversal may proceed in a specific order, such as depth-first or breadth-first.

At block 380, the visited edges may appended to the list of visited edges. In some embodiments, each edge included in the graph may be visited and appended to the list of visited edges. In some embodiments, by creating a list of visited edges, a longest unique path length may be calculated or determined. In some embodiments, the longest unique path may be a feature corresponding to the graph associated with the incident, which may be appended to the list of graph features at block 382.

At block 382, the graph features determined may be appended to the list of graph features. Upon appending the features to the list of graph features, the method 350 may proceed to block 356. If it is determined at block 356 that the incident associated with the list of graph features is the last incident, the method 350 will proceed to block 384 where the method 350 may end. If it is determined at block 356 that the incident associated with the list of graph features is not the last incident, the method 350 may proceed to block 358 where events associated with another incident may be filtered and the method 350 may continue to iterate until each incident has been analyzed.

Modifications, additions, or omissions may be made to the method 350 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

Returning to FIG. 2, the features generated using the feature generation module 216 and/or the labels generated using the label generation module 212 may be included in the training data 206. In some embodiments, the training data 206 may be used to train the machine learning model 208. In some embodiments, the labels and features generated using the completed process flow data 202 may provide valuable input for training the machine learning model 208 to predict behaviors of ongoing process flows. The labels may represent various characteristics of resolved incidents, such as resolution time, severity level, or resource requirements. These labels may serve as target variables that the machine learning model 208 may learn to predict based on the input features. In some instances, accurate labels generated from the completed process flow data 202 may improve an effectiveness of loss functions included in the training of the machine learning model 208, enabling more robust performance of the machine learning model 208. In some embodiments, using precise labels, the training algorithm used in training the machine learning model 208 may more effectively improve parameters included in algorithms corresponding to the machine learning model 208 which may result in a decrease in prediction errors and improvement in overall performance of the machine learning model 208 in predicting behaviors associated with ongoing process flows.

In some embodiments, the features extracted from the completed process flow data 202 may capture important attributes and patterns that may be indicative of how an incident progresses and resolves. In some instances, the features may include metrics like response times, number of escalations, types of actions taken, or properties of the incident itself. By training on a diverse set of labeled examples with rich feature sets, the machine learning model 208 may learn to recognize complex relationships and patterns that may help predict outcomes for new, ongoing incidents. As a result, in some instances, the machine learning model 208 may be better equipped to make accurate predictions about future behavior in ongoing process flows, identifying important decision points and/or anticipating potential bottlenecks or delays in resolving incidents associated with the ongoing process flows.

In these or other embodiments, the training data 206 may be the same as and/or analogous to the training data 106 described and/or illustrated further in the present disclosure such as, for example, with respect to FIG. 1.

The machine learning model 208 may be the same as and/or analogous to the machine learning model 108 that may be described and/or illustrated further in the present disclosure such as, for example, with respect to FIG. 1. In some embodiments, the machine learning model 208 may be configured to be trained using the labels and features generated using the label generation module 212 and the feature generation module 216.

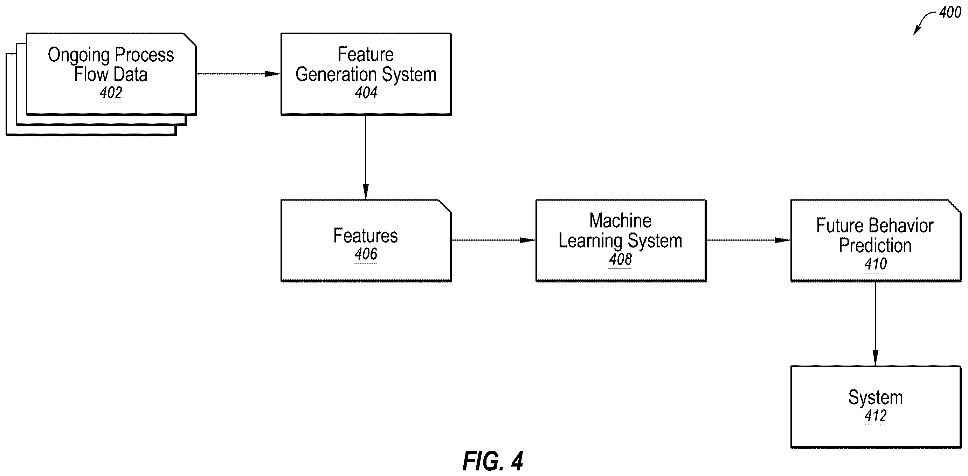

FIG. 4 illustrates an example environment 400 including a machine learning system 408 designed to generate future behavior prediction 410 associated with an ongoing process flow based on ongoing process flow data 402, according to one or more embodiments of the present disclosure. In the illustrated example, the environment 400 may include a feature generation system 404, a machine learning system 408, and a system 412. In some embodiments, the feature generation system 404 may be configured to receive ongoing process flow data 402 and generate an output 406 which may be sent to the machine learning system 408. The machine learning system 408 may be configured to generate one or more future behavior predictions 410 associated with ongoing process flows associated with ongoing process flow data 402 and send the future behavior prediction 410 to the system 42.

The ongoing process flow data 402 may include any data associated with ongoing process flows. As used in the present disclosure, an ongoing process flow is a description of events that correspond to an incident that has yet to be resolved. This is in contrast with completed process flows which is a description of events that correspond to an incident that has been resolved as described further in the present disclosure such as, for example, with respect to FIG. 1. In some embodiments, with the exception that the ongoing process flow data 402 corresponds to one or more incidents that have yet to be resolved, the data included in the ongoing process flow data 402 may be analogous to the completed process flow data 102 and/or the completed process flow data 202 described and/or illustrated in the present disclosure such as, for example, with respect to FIGs. 1 and 2.

In some embodiments, the ongoing process flow data 402 may include data associated with a single ongoing process flow. Additionally or alternatively, the ongoing process flow data 402 may include data associated with multiple ongoing process flows. In some embodiments, the ongoing process flow data 402 may be sent or communicated to and/or extracted by the feature generation system 404.

The feature generation system 404 may include any suitable system, apparatus, or device configured to receive or otherwise obtain the ongoing process flow data 402. In some embodiments, the feature generation system 404 may be included in one or more other systems. Additionally or alternatively, the feature generation system 404 may direct one or more other systems to perform one or more operations.

In some embodiments, the feature generation system 404 may be configured to receive or otherwise obtain the ongoing process flow data 402. In some embodiments, the feature generation system 404 may be sent the ongoing process flow data 402 from one or more other systems. Additionally or alternatively, the feature generation system 404 may be configured to access and extract the ongoing process flow data 402 from one or more databases and/or other data repositories.

In some embodiments, the feature generation system 404 may be configured to obtain ongoing process flow data 402 associated with an incident. In some embodiments, the ongoing process flow data 402 may be automatically obtained or extracted based on the ongoing process flow data 402 indicating that the corresponding incident has elapsed for a predetermined time. For example, the ongoing process flow data 402 may include data corresponding to an incident that has been ongoing for two weeks which may be the predetermined time to extract the ongoing process flow data 402. Continuing the example, because the predetermined time is two weeks, the ongoing process low data 402 associated with the ongoing process flow may be automatically extracted or otherwise obtained.

In some embodiments, the predetermined time to extract the ongoing process flow data 402 may be determined or defined based on one or more machine learning models included in the machine learning system 408 being trained to predict behavior of an ongoing process flow data 402.

For example, one or more machine learning models may have been trained using one or more processes described and/or illustrated further in the present disclosure such as, for example, with respect to FIGs. 1-3C. Continuing the example, the one or more machine learning models may be trained to predict behavior of an ongoing process flow after one week has elapsed for an ongoing process flow. Further continuing the example, the feature generation system 404 may be configured to automatically extract ongoing process flow data 402 associated with the ongoing process flow once the corresponding ongoing process flow has reached one week in duration.

In some embodiments, the feature generation system 404 may be configured to perform one or more preprocessing operations on the ongoing process flow data 402. Additionally or alternatively, the feature generation system 404 may be configured to perform one or more operations on the ongoing process flow to generate one or more features 406. In these or other embodiments, the preprocessing operations and/or the one or more operations to generate the features 406 may be the same as and/or analogous to the preprocessing operations and/or feature generation operations described and/or illustrated further in the present disclosure such as, for example, with respect to the process flow pipeline 104, the process flow pipeline 204, and/or corresponding operations that may be described and/or illustrated further in the present disclosure such as, for example, with respect to FIGs. 1, 2, and 3A-3C.

The features 406 may be the same as and/or analogous to features whose generation, structure, and/or use may be described and/or illustrated in the present disclosure such as, for example, with respect to FIGs. 1-3C. In some embodiments, the features 406 may be sent to the machine learning system 408 to generate one or more predictions of future behavior of the ongoing process flow associated with the ongoing process flow data 402.

The machine learning system 408 may include any suitable system, apparatus, or device configured to receive or otherwise obtain the features 406 and generate one or more future behavior predictions 410. In some embodiments, the machine learning system 408 may include one or more machine learning models that may be configured to generate the future behavior predictions 410. In some embodiments, the one or more machine learning models that may be included in the machine learning system 408 may be trained using completed process flow data-e.g., the completed process flow data 102 and/or the completed process flow data 202-with one or more methods or operations described and/or illustrated further in the present disclosure such as, for example, with respect to FIGs. 1-3C and 5.

In some embodiments, in instances where the machine learning system 408 includes multiple machine learning models, the machine learning models may ach be configured to generate future behavior predictions 410 based on the features 406 generated at different times corresponding to an ongoing process flow. For example, the machine learning system 408 may include a first machine learning model configured to generate future behavior prediction 410 based on features 406 associated with a first time period associated with the ongoing process flow data 402. Continuing the example, the machine learning system 408 may additionally include a second machine learning model configured to generate future behavior prediction 410 based on features 406 associated with a second time period associated with the ongoing process flow data 402, and so on.

The future behavior prediction 410 includes data and/or information that may indicate a future behavior of the ongoing process flow. In some embodiments, indicating a future behavior of the ongoing process flow may include a characteristic, trend, or pattern. In some embodiments, the future behavior prediction may include key performance indicators (KPIs), such as throughput, latency, or resource utilization, that are projected to evolve based on the current trajectory of the process. Additionally or alternatively, future behavior prediction 410 may include identifying potential risks, delays, or bottlenecks that may impact the flow, enabling proactive adjustments or interventions. For example, the prediction may estimate the likelihood of certain events occurring, such as a process reaching a critical threshold or a failure in a component that may disrupt the flow. Additionally or alternatively, the future behavior prediction 410 may include a description of whether and when the ongoing process flow may resolve. Additionally or alternatively, the future behavior prediction 410 may include a description or indication of evens that have yet to occur in the ongoing process flow.

In some embodiments, the future behavior prediction 410 may be communicated to or otherwise obtained by a system 412. The system 412 may include any suitable system, apparatus, or device configured to receive or otherwise obtain the future behavior prediction 410 and perform one or more operations based on the future behavior prediction. In some embodiments, the system 412 may include the feature generation system 404 and/or the machine learning system 408. Additionally or alternatively, the system 412 may be separate from one or more of the feature generation system 404 and the machine learning system 408.

In some embodiments, the system 412 may be configured to perform one or more operations based on the future behavior prediction 410. For example, in the context of a customer service ticket as an ongoing process, the future behavior prediction 410 may include data and/or information indicating that a particular ticket is likely to escalate due to the nature of the inquiry or the involvement of high-priority issues. Based on this prediction, the system 412 may automatically route the ticket to a senior support representative or trigger a notification to ensure timely intervention.

As another example, in the context of an ongoing process flow describing a car rental trip, the future behavior prediction 410 may include data and/or information that may indicate that a vehicle may be returned late due to rental history or other conditions. In response, the system 412 may proactively adjust the rental schedule, alert the customer, or offer alternative solutions to mitigate any operational disruptions.

In some embodiments, the system 412 may adjust one or more operations based on the future behavior prediction 410 adjusting over time for the same ongoing process flow. For example, an incident may include a single trip in the context of an eScooter rental. The trip may be ongoing-e.g., the rider is en route from a beginning location to an ending location-and therefore the data associated with the trip may be considered ongoing process flow data. Continuing the example, three machine learning models may be included in the machine learning system 408 that may be configured to generate future behavior prediction 410 at different time intervals during the incident. The first machine learning model may be configured to generate future behavior prediction 410 of the ongoing process flow at 10 minutes, the second at 15 minutes, and the third at 20 minutes. Further continuing the example, ongoing process flow data 402 may be automatically obtained by the machine learning system 408 at 10 minutes where the first machine learning model may generate a future behavior prediction 410. The same may be true at 15 minutes and 20 minutes where the second and third models may generate subsequent, future behavior predictions 410 at corresponding time intervals.

In some embodiments, the future behavior prediction 410 may be received by the system 412 in real time or near real time.

In some embodiments, the future behavior prediction 410 may allow the system 412 to make informed decisions, improve resource allocation, improve customer satisfaction, etc. by anticipating issues before they arise. Additionally, the system 412 may be able to trigger automated workflows, such as initiating follow-up actions, adjusting timelines, or notifying relevant parties, thus enabling the process flow to continue smoothly and efficiently in alignment with the predicted future behavior 410.

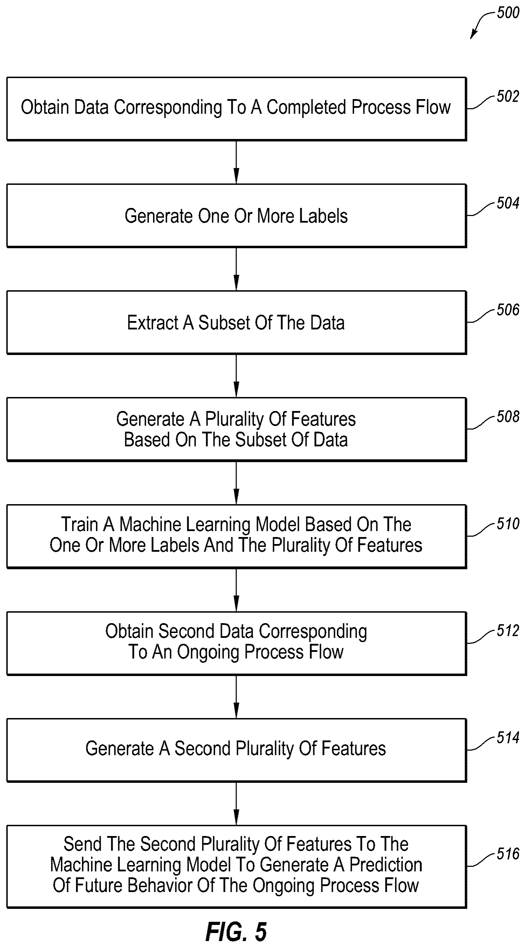

FIG. 5 illustrates an example flow chart of an example method 500 of training a machine learning model to predict behavior associated with one or more ongoing process flows, in accordance with one or more embodiments of the present disclosure. The method 500 may be implemented by any suitable element of a machine learning system such as the process flow pipeline 104 of FIG. 1, the process flow pipeline 204 of FIG. 2, the feature generation system 404, the machine learning system 408, and/or the system412 of FIG. 4. Although illustrated as discrete steps, various steps of the method 500 may be divided into additional steps, combined into fewer steps, or eliminated, depending on the desired implementation. Additionally, the order of performance of the different steps may vary depending on the desired implementation.

In some embodiments, the method 500 may include block 502. At block 502, data corresponding to a completed process flow may be obtained. In some embodiments, the data corresponding to a completed process flow may be the same as and/or analogous to the completed process flow data 102 and/or the completed process flow data 202 described and/or illustrated further in the present disclosure such as, for example, with respect to FIGs. 1 and 2.

In these and/or other embodiments, any suitable device, apparatus, system, etc. may be used to obtain the data corresponding to the completed process flow at block 502. For example, the process flow pipeline 104 and/or the process flow pipeline 204 that may be described and/or illustrated further in the present disclosure such as, for example, with respect to FIGs. 1 and 2.

At block 504, one or more labels may be generated based on the obtained data corresponding to the completed process flow. In some embodiments, the one or more labels may be used as ground truth or target variables for training one or more machine learning models, neural networks, and the like. In some embodiments, the generated one or more labels may be included in the training data 106 and/or the training data 206 described and/or illustrated further in the present disclosure such as, for example, with respect to FIGs. 1 and 2. Further, the one or more labels may be generated using any suitable device, apparatus, system, etc. For example, the process flow pipeline 104 and/or the process flow pipeline 204 that may be described and/or illustrated further in the present disclosure such as, for example, with respect to FIGs. 1 and 2.

At block 506, a subset of the data may be extracted from the data obtained corresponding to a completed process flow. In some embodiments, the subset of data may include a portion of the data corresponding to the completed process flow. In some embodiments, the subset of data may be extracted based on a predetermined time range cutoff as described further in the present disclosure such as, for example, with respect to the time cutoff module 214 in FIG. 2.

At block 508, a plurality of features may be generated based on the subset of data. In some embodiments, the plurality of feature vectors may be expressed as a corresponding plurality of feature vectors that may be generated from a list including direct feature generation, activity-based feature generation, duration-based feature generation, time delta-based feature generation, state graph-based feature generation, and/or calendar-based feature generation. In these or other embodiments, the plurality of features may be generated using any suitable device, apparatus, system, etc. For example, the process flow pipeline 104 and/or the process flow pipeline 204 that may be described and/or illustrated further in the present disclosure such as, for example, with respect to FIGs. 1 and 2. Additionally, the plurality of features may be determined, calculated, and/or generated using one or more methods described further in the present disclosure such as, for example, those methods described with respect to the feature generation module 216 described with respect to FIGs. 2-3C.

At block 510, a machine learning model may be trained based on the one or more generated labels and the plurality of features.

At block 512, second data corresponding to an ongoing process flow may be obtained. In some embodiments, the second data corresponding to an ongoing process flow may be the same as and/or analogous to the ongoing process flow data 402 described and/or illustrated further in the present disclosure such as, for example, with respect to FIG. 4.

At block 514, a second plurality of features may be generated based on the second data. In some embodiments, the second plurality of features may be expressed as a second corresponding plurality of feature vectors that may be generated from a list including direct feature generation, activity-based feature generation, duration-based feature generation, time delta-based feature generation, state graph-based feature generation, and calendar-based feature generation.

In some embodiments, the second plurality of features may be generated using any suitable device, apparatus, system, etc. For example, feature generation system 416 that may be described and/or illustrated further in the present disclosure such as, for example, with respect to FIG. 4. In some embodiments, the second plurality of features may be determined, calculated, and/or generated using one or more methods described further in the present disclosure such as, for example, those methods described with respect to the feature generation module 216 described with respect to FIGs. 2-4.

At block 516, the second plurality of features may be sent to the machine learning model. In some embodiments, the machine learning model may be trained to predict future behavior of the ongoing process flow. In some embodiments, the machine learning model may be configured to generate future behavior predictions based on the second plurality of features that may correspond to an ongoing process flow. In some embodiments, the machine learning model may be the same as and/or analogous to the machine learning model 108, the machine learning model 208, and/or the machine learning model 408 described and/or illustrated in the present disclosure such as, for example, with respect to FIGs. 1, 2, and 4.

Modifications, additions, or omissions may be made to the method 300 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

FIG. 6 illustrates a block diagram of an example computing system 602, according to at least one embodiment of the present disclosure. The computing system 602 may be configured to implement or direct one or more suitable operations described in the present disclosure. For example, the computing system 602 may be used in various elements of the above disclosure (e.g., the process flow pipeline 104, the machine learning model 108 of FIG. 1, the process flow pipeline 204, the matching and selection module 210, the label generation module 212, the time cutoff module 214, the feature generation module 216, the machine learning model 208 of FIG. 2, the feature generation system and/or the machine learning system of FIG. 4). In some embodiments, the computing system 602 may be used to control operations related to generating training data (e.g., labels and/or features for training one or more machine learning models). The computing system 602 may include a processor 650, a memory 652, and a data storage 654. The processor 650, the memory 652, and the data storage 454 may be communicatively coupled.

In general, the processor 650 may include any suitable computer, computing entity, or processing device including various computer hardware or software modules and may be configured to execute instructions stored on any applicable computer-readable storage media. For example, the processor 650 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 6, the processor 650 may include any number of processors configured to, individually or collectively, perform or direct performance of any number of operations described in the present disclosure. Additionally, one or more of the processors may be present on one or more different electronic devices, such as different servers.

In some embodiments, the processor 650 may be configured to interpret and/or execute program instructions and/or process data stored in the memory 652, the data storage 654, or the memory 652 and the data storage 654. In some embodiments, the processor 650 may fetch program instructions from the data storage 654 and load the program instructions in the memory 652. After the program instructions are loaded into memory 652, the processor 650 may execute the program instructions.

The memory 652 and the data storage 654 may include computer-readable storage media for carrying or having computer-executable instructions or data structures stored thereon. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other non-transitory storage medium which may be used to store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007).

Combinations of the above may also be included within the scope of computer-readable storage media. Computer-executable instructions may include, for example, instructions and data configured to cause the processor 650 to perform a certain operation or group of operations.

Modifications, additions, or omissions may be made to the computing system 602 without departing from the scope of the present disclosure. For example, in some embodiments, the computing system 602 may include any number of other components that may not be explicitly illustrated or described.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.
All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method comprising:
obtaining data corresponding to a completed process flow, the completed process flow being associated with an incident that has been resolved;
generating one or more labels representing characteristics of the incident that serve as target variables for training a machine learning model based on the data corresponding to the completed process flow;
extracting a subset of the data corresponding to a predefined time range cutoff defined within a total amount of time to resolve the incident;
generating a plurality of features representing identifiable attributes derived from the obtained data corresponding to the completed process flow for training the machine learning model based on the subset of the data corresponding to the predefined time range cutoff; and
training the machine learning model to predict future behavior of an ongoing process flow using the plurality of features and the one or more labels associated with the data corresponding to the completed process flow.

2. The method of claim 1, wherein generating one or more labels includes:
extracting label data associated with one or more characteristics in the data corresponding to the completed process flow; and
encoding the label data into a format suitable for training the machine learning model.

3. The method of claim 1, further comprising:
automatically obtaining second data corresponding to an ongoing process flow based on the ongoing process flow reaching the predefined time range cutoff, the ongoing process flow being associated with an incident that has yet to be resolved, the second data occurring during the predefined time range cutoff;
generating a second plurality of features associated with the second data corresponding to the predefined time range cutoff;
sending the second plurality of features to the machine learning model to generate a prediction of future behavior associated with the ongoing process flow;
receiving the prediction of future behavior associated with the ongoing process flow; and
performing one or more operations based on the received prediction.

4. The method of claim 1, wherein the plurality of features is expressed as a corresponding plurality of feature vectors generated using one or more of: direct feature generation, activity-based feature generation, duration-based feature generation, time delta-based feature generation, state graph-based feature generation, or calendar-based feature generation.

5. The method of claim 1, further comprising:
extracting a plurality of subsets of the data occurring during a corresponding plurality of predefined time range cutoffs, each defined within the total amount of time for the completed process flow;
generating the plurality of features for each of the plurality of subsets of the data; and
training a plurality of machine learning models corresponding to each of the extracted plurality of subsets of the data, wherein each machine learning model of the plurality of machine learning models is trained to predict future behavior of an ongoing process flow.

6. The method of claim 1, wherein the data corresponding to the completed process flow is transformed using one or more preprocessing operations such that the transformed data is configured to be used as training data to train the machine learning model.

7. The method of claim 6, wherein the one or more preprocessing operations includes identifying and retaining relevant data included in the data corresponding to the completed process flow, the relevant data including data points that are directly relevant to the training of the machine learning model.

8. A system comprising:
one or more processors; and
one or more non-transitory computer-readable storage media configured to store instructions that, in response to being executed, cause the system to perform operations, the operations comprising:
obtaining data corresponding to a completed process flow, the completed process flow being associated with an incident that has been resolved;
generating one or more labels representing characteristics of the incident that serve as target variables for training a machine learning model based on the data corresponding to the completed process flow;
extracting a subset of the data corresponding to a predefined time range cutoff defined within a total amount of time to resolve the incident;
generating a plurality of features representing identifiable attributes derived from the obtained data corresponding to the completed process flow for training the machine learning model based on the subset of the data corresponding to the predefined time range cutoff; and
training the machine learning model to predict future behavior of an ongoing process flow using the plurality of features and the one or more labels associated with the data corresponding to the completed process flow.

9. The system of claim 8, wherein generating one or more labels includes:
extracting label data associated with one or more characteristics in the data corresponding to the completed process flow; and
encoding the label data into a format suitable for training the machine learning model.

10. The system of claim 9, the operations further comprising:
automatically obtaining second data corresponding to an ongoing process flow based on the ongoing process flow reaching the predefined time range cutoff, the ongoing process flow being associated with an incident that has yet to be resolved, the second data occurring during the predefined time range cutoff;
generating a second plurality of features associated with the second data corresponding to the predefined time range cutoff;
sending the second plurality of features to the machine learning model to generate a prediction of future behavior associated with the ongoing process flow;
receiving the prediction of future behavior associated with the ongoing process flow; and
performing one or more operations based on the received prediction.

11. The system of claim 8, wherein the plurality of features is expressed as a corresponding plurality of feature vectors generated using one or more of: direct feature generation, activity-based feature generation, duration-based feature generation, time delta-based feature generation, state graph-based feature generation, or calendar-based feature generation.

12. The system of claim 8, the operations further comprising:
extracting a plurality of subsets of the data occurring during a corresponding plurality of predefined time range cutoffs, each defined within the total amount of time for the completed process flow;
generating the plurality of features for each of the plurality of subsets of the data; and
training a plurality of machine learning models corresponding to each of the extracted plurality of subsets of the data, wherein each machine learning model of the plurality of machine learning models is trained to predict future behavior of an ongoing process flow.

13. The system of claim 8, wherein the data corresponding to the completed process flow is transformed using one or more preprocessing operations such that the transformed data is configured to be used as training data to train the machine learning model.

14. The system of claim 13, wherein the one or more preprocessing operations includes identifying and retaining relevant data included in the data corresponding to the completed process flow, the relevant data including data points that are directly relevant to the training of the machine learning model .

15. One or more non-transitory computer-readable storage media configured to store instructions that, in response to being executed, cause a system to perform operations, the operations comprising:
obtaining data corresponding to a completed process flow, the completed process flow being associated with an incident that has been resolved;
generating one or more labels representing characteristics of the incident that serve as target variables for training a machine learning model based on the data corresponding to the completed process flow;
extracting a subset of the data corresponding to a predefined time range cutoff defined within a total amount of time to resolve the incident;
generating a plurality of features representing identifiable attributes derived from the obtained data corresponding to the completed process flow for training the machine learning model based on the subset of the data corresponding to the predefined time range cutoff; and
training the machine learning model to predict future behavior of an ongoing process flow using the plurality of features and the one or more labels associated with the data corresponding to the completed process flow.

16. The one or more non-transitory computer-readable storage media of claim 15, wherein generating one or more labels includes:
extracting label data associated with one or more characteristics in the data corresponding to the completed process flow; and
encoding the label data into a format suitable for training the machine learning model.

17. The one or more non-transitory computer-readable storage media of claim 15, the operations further comprising:
automatically obtaining second data corresponding to an ongoing process flow based on the ongoing process flow reaching the predefined time range cutoff, the ongoing process flow being associated with an incident that has yet to be resolved, the second data occurring during the predefined time range cutoff;
generating a second plurality of features associated with the second data corresponding to the predefined time range cutoff;
sending the second plurality of features to the machine learning model to generate a prediction of future behavior associated with the ongoing process flow;
receiving the prediction of future behavior associated with the ongoing process flow; and
performing one or more operations based on the received prediction.

18. The one or more non-transitory computer-readable storage media of claim 15, wherein the plurality of features is expressed as a corresponding plurality of feature vectors generated using one or more of: direct feature generation, activity-based feature generation, duration-based feature generation, time delta-based feature generation, state graph-based feature generation, or calendar-based feature generation.

19. The one or more non-transitory computer-readable storage media of claim 15, the operations further comprising:
extracting a plurality of subsets of the data occurring during a corresponding plurality of predefined time range cutoffs, each defined within the total amount of time for the completed process flow;
generating the plurality of features for each of the plurality of subsets of the data; and
training a plurality of machine learning models corresponding to each of the extracted plurality of subsets of the data, wherein each machine learning model of the plurality of machine learning models is trained to predict future behavior of an ongoing process flow.

20. The one or more non-transitory computer-readable storage media of claim 15, wherein the data corresponding to the completed process flow is transformed using one or more preprocessing operations such that the transformed data is configured to be used as training data to train the machine learning model.
